Europäisches Patentamt

European Patent Office

Office européen des brevets

(11) Veröffentlichungsnummer: **0 281 940 B1**

(12) **EUROPÄISCHE PATENTSCHRIFT**

(45) Veröffentlichungstag der Patentschrift: **08.07.92**

(21) Anmeldenummer: **88103264.3**

(22) Anmeldetag: **03.03.88**

(51) Int. Cl.⁵: **C02F 1/78**, C02F 1/32, C02F 1/46

(54) **Verfahren zum Abbau von organischen Stoffen und/oder von Keimen in vorbehandeltem Speisewasser für Reinstwasserkreisläufe.**

(30) Priorität: **11.03.87 CH 917/87**

(43) Veröffentlichungstag der Anmeldung:
**14.09.88 Patentblatt 88/37**

(45) Bekanntmachung des Hinweises auf die
Patenterteilung:
**08.07.92 Patentblatt 92/28**

(84) Benannte Vertragsstaaten:
**CH DE FR GB LI**

(56) Entgegenhaltungen:
**EP-A- 0 242 533**      **DE-A- 3 243 817**
**GB-A- 2 136 790**      **US-A- 3 822 786**
**US-A- 4 311 569**      **US-A- 4 416 747**

**SOLID STATE TECHNOLOGY, Band 27, Nr. 10, Oktober 1984, Seiten 185-193, Port Washington, New York, US; C. NEBEL et al.: "Purification of deionized water by oxidation with ozone"**

**PATENT ABSTRACTS OF JAPAN, Band 11, Nr. 8 (C-396)[2455], Seite 41 C 396;**

**PATENT ABSTRACTS OF JAPAN, Band 10, Nr. 339 (C-385)[2395], 15. November 1986;**

(73) Patentinhaber: **Ozonia AG**
**Schaffhauserstrasse 418**
**CH-8050 Zürich(CH)**

(72) Erfinder: **Baumann, Hans, Dr.**
**Brunnengässli 5**
**CH-5452 Staretschwil(CH)**
Erfinder: **Stucki, Samuel, Dr.**
**Sternenstrasse 7**
**CH-5415 Nussbaumen(CH)**

(74) Vertreter: **Rzehak, Herbert et al**
**Asea Brown Boveri AG Abteilung TEI-Immaterialgüterrecht Wiesenstrasse 26**
**CH-5401 Baden(CH)**

**Beschreibung**

Verfahren zum Abbau von organischen Stoffen und/oder von Keimen in vorbehandeltem Speisewasser für Reinstwasserkreisläufe

Bei der Erfindung wird ausgegangen von einem verfahren zum Abbau von organischen Stoffen und/oder von Keimen in vorbehandeltem Speisewasser für Reinstwasserkreisläufe nach dem Oberbegriff der Patentansprüche 1 und 2.

Die Erfindung bezieht sich auf die Bereitstellung von äusserst reinem Wasser, vorwiegend für Spülzwecke in der Fabrikation von Halbleiter-Bauteilen der Elektronikindustrie. Das für derartige Zwecke bereitzustellende Speisewasser stellt höchste Anforderungen an Reinheit, Freiheit von organischen Inhaltsstoffen, Keimen, Salzen und Gasen. Es sind daher Einrichtungen zur Entsalzung, Enthärtung, Filtration, Entgasung, Entfernung von organischen Bestandteilen, Entkeimung und Desinfektion notwendig.

Mit dem jeweiligen Oberbegriff nimmt die Erfindung auf die als stand der Technik geltende EP-A1-0 242 533 Bezug. Dort wird ein Verfahren und eine Vorrichtung zur Aufbereitung von Speisewasser mittels Ozon für die Umkehrosmose angegeben, bei welchem die Beladung von Speisewasser mit Ozon in einem Mischgefäss erfolgt, dem ein Verweilzeitbehälter nachgeschaltet ist. Anschliessend erfolgt eine Restozonvernichtung durch eine UV-Bestrahlung.

Von der nachgeschalteten Umkehrosmose wird ein Teil des Permeatstromes durch eine Elektrolysezelle mit einer Membran aus einem organischen Feststoffelektrolyten geschickt, die das Ozon für die Speisewasserbehandlung produziert.

Bei diesem Verfahren wird ein Teil des mit Ozon beladenen Permeats in den Hauptstrom des zu reinigenden Wassers eingeleitet. Das Ozon wird nicht in situ erzeugt.

Der Stand der Technik von Reinstwasserkreisläufen inklusive Vorbehandlung des Wassers sind an zahlreichen Stellen beschrieben worden (vgl. R.A. Hango, "Deionized Water System", Solid State Technology, 1983, July, S. 107-111).

Die in der Regel für die Entkeimung eingesetzten Ultraviolett-Strahler wirken nur im Strahlengang der Lampe und stellen daher keinen absolut zuverlässigen Schutz dar. Eine Ozonbehandlung würde diesen Nachteil zwar ausmerzen, doch gelangt hierdurch nicht erwünschter Sauerstoff in den Kreislauf. Die synergetische Wirkung von Ozon und Ultraviolett-Bestrahlung ist beschrieben worden (vgl. z.B. R. Barker, F.M. Taylor, "Oxidation of 2 Propanol in Dilute Aqueous Solution by UV/Ozone", Proceedings of the Int. Conf., - The Role of Ozone and Wastewater Treatment, London, 13-14. Nov. 1985).

Es ist bekannt, Sauerstoff bei Raumtemperatur mit Wasserstoff in Gegenwart von Katalysatoren (Palladium) zu reduzieren, wobei Wasser gebildet wird (vgl. u.a. F. Martinola, S. Oeckl, P. Thomas,"Catalytic Reduction of Oxygen in Water", Vom Wasser 65, 1985, S. 163/72, Translation).

Elektrochemische Zellen mit einem Feststoffelektrolyten in Form einer Membran aus einem Kunststoffpolymer (Ionenaustauscher) und entsprechende Gewinnungsverfahren für gasförmige Produkte sind an zahlreichen Stellen beschrieben worden. Derartige Zellen lassen sich vorteilhafterweise zur Herstellung von Ozon verwenden (vgl. z.B. US-A-4 416 747; EP-B-0 068 522; H.P. Klein, S. Stucki, The Production of Ozone by Electrolysis and its Application in high purity Water Systems, Conference Proceedings 7th Ozone World Congress, S. 110-115, 9.-12. Sept. 1985, Tokyo).

Die vorstehend beschriebenen Verfahren und Vorrichtungen genügen im allgemeinen den stetig steigenden Anforderungen für Reinstwasserkreisläufe nicht mehr. Es besteht daher ein Bedürfnis, die Verfahren zu verfeinern und weiter zu entwickeln.

Die Erfindung, wie sie in den Patentansprüchen 1 und 2 definiert ist, löst die Aufgabe, ein Verfahren zum Abbau von organischen Stoffen und/oder von Keimen in vorbehandeltem Speisewasser für Reinstwasserkreisläufe der eingangs genannten Art derart weiterzuentwickeln, dass es den gesteigerten Anforderungen an Spülwasser in der Fertigung von Elektronik-Bauteilen bezüglich Freiheit von organischen Inhaltsstoffen, Keimen und Sauerstoff genügt.

Ein Vorteil der Erfindung besteht darin, dass sie sich einfach, betriebssicher sowie kostengünstig realisieren lässt und reproduzierbare Resultate liefert.

Von besonderer Bedeutung ist die Herabsetzung des Restsauerstoffgehaltes im gereinigten Wasser. Durch die Zufuhr von Wasserstoff zum ozonisierten Wasser kann eine besondere Einrichtung zum Abziehen von gasförmigem und/oder im Wasser gelöstem Sauerstoff und Ozon vermieden werden.

Weg zur Ausführung der Erfindung

Die Erfindung wird anhand der nachfolgenden, durch eine Figur näher erläuterten Ausführungsbeispiele beschrieben.

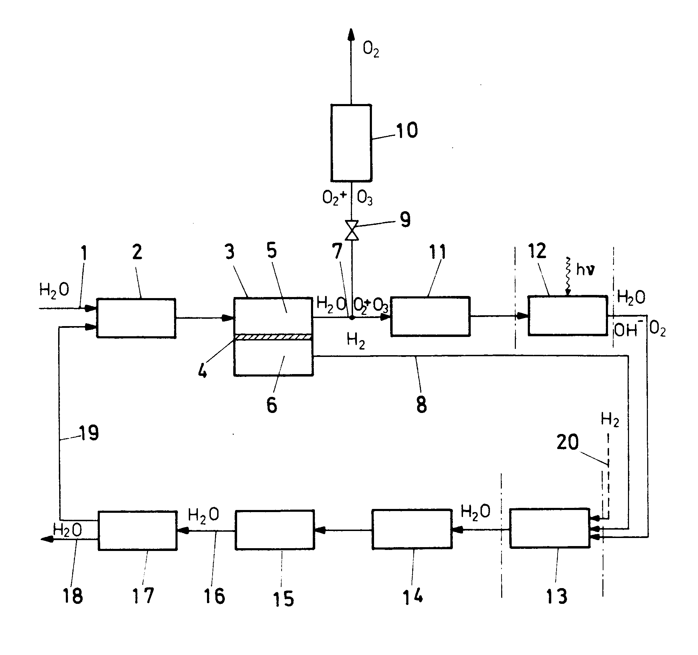

Dabei zeigt die Figur ein schematisches Fliessdiagramm des Verfahrens. 1 ist die durch einen Pfeil angedeutete Speisewasserzufuhr (Rohwasser) zur Vorbehandlungseinrichtung 2 (Speisewasseraufbereitung). Diese kann je nach Bedarf aus einem oder mehreren Filtern, Apparaten zur Wasserenthärtung, Entsalzung und Umkehrosmose, Ionenaustauschern etc. und aus beliebigen Kombinationen derartiger Geräte bestehen. Von hier gelangt das Wasser in eine elektrochemische Zelle 3, welche mit einem Feststoffelektrolyten 4 in Form einer Membran aus einem Kunststoffpolymer ausgerüstet ist. Im Anodenraum 5 werden Sauerstoff und Ozon, im Kathodenraum 6 Wasserstoff entwickelt. Das anodisch erzeugte $O_2$ und $O_3$, welches mit dem $H_2O$ den Anodenraum 5 verlässt, ist mit dem Bezugszeichen 7, das kathodisch erzeugte $H_2$, welches aus dem Kathodenraum 6 abgezogen wird, mit dem Bezugszeichen 8 bezeichnet. 9 ist ein Ventil für allfälligen $O_2$- und $O_3$-Abzug, 10 eine daran angeschlossene Einrichtung zur Ueberführung von $O_3$ in $O_2$. Das Wasser gelangt nun in den Verweilzeitbehälter 11, wo z.B. organische Stoffe und/oder Mikroorganismen der Einwirkung von $O_2$ und $O_3$ unterliegen und abgebaut werden. Es folgt das Reaktionsgefäss 12 für Ultraviolett-Bestrahlung (durch den gewellten Pfeil h $\nu$ angedeutet), in welchem durch Reaktion von $H_2O$ mit $O_3$ OH-Radikale erzeugt, das überschüssige $O_3$ zu $O_2$ reduziert und Keime zerstört werden. Das Wasser gelangt nun in das Reaktionsgefäss 13, in welchem unter Einwirkung eines Katalysators (z.B. Palladium) mit Hilfe von $H_2$-Zusatz der Abbau des verbliebenen $O_2$ und $O_3$ bei Raumtemperatur erfolgt. Das $H_2$ kann vorzugsweise dem Kathodenraum 6 der elektrochemischen Zelle 3 entnommen werden (Bezugszeichen 8). Wahlweise kann auch eine Zufuhr von Fremdwasserstoff entsprechend gestrichelter Linie und Bezugszeichen 20 erfolgen. 14 ist ein Mischbett (Ionenaustauscher), welches einen Teil der Reaktionsprodukte zurückbehält. Der Rest der letzteren wird im Filter 15 zurückgehalten. 15 kann in einer Ultrafiltrationsstufe und/oder einer Umkehrosmosestufe bestehen. Der Pfeil 16 stellt die endgültige Wasserbereitstellung (Reinstwasser) dar, welche nun dem Verbraucher 17 zugeführt wird. 18 ist die aus dem Verbraucher 17 abgezweigte Abwasserabfuhr. Ein Teil des verbrauchten Wassers wird via Wasserrückführung 19 wieder der Vorbehandlungseinrichtung 2 zugeführt.

Die Apparate 12 und 13 sind zwischen gestrichelte Linien gesetzt, da sie wahlweise einzeln oder in Kombination verwendet werden können, d.h. 12 oder 13 kann je auch weggelassen werden.

Ausführungsbeispiel 1:

Das Verfahren gemäss Variante A wurde in einer Versuchanlage durchgeführt, in der das Reaktionsgefäss 13 mit Katalysator zum Abbau von $O_2$ und $O_3$ fehlte. Dementsprechend wurde hier kein kathodisch erzeugtes $H_2$ (8) noch Fremdwasserstoff (20) zugeführt.

Die Vorbehandlungseinrichtung 2 bestand aus einer Apparatur zur Umkehrosmose, aus einem Mischbett mit Kationen-Anionen-Austauscher und Filter. Das eingespeiste Rohwasser 1 war zuvor enthärtet und voll entsalzt worden. Die elektrochemische Zelle 3 mit Feststoffelektrolyt 4 (Kunststoffpolymer mit Handelsnamen "Nafion" von Du Pont) hatte eine Elektrodenfläche von 3 $cm^2$. Sie wurde mit einer Wassermenge von 100 l/h beaufschlagt und mit einem Strom von 4A (Stromdichte 1,33 $A/cm^3$) unter einer totalen Spannung von 3,95 V betrieben. Dabei stellte sich im zuvor entgasten Wasser eine $O_2$-Konzentration von 9,4 mg/l und eine $O_3$-Konzentration von 2,2 mg/l ein. Der Verweilzeitbehälter 11 hatte einen Inhalt von 1300 ml. Daraus ergab sich eine Verweilzeit von ca. 47 s. Das Reaktionsgefäss 12 für UV-Bestrahlung bestand aus einem Behälter aus Quarzglas mit 1320 ml Inhalt, der mit einem Quecksilberdampf-Niederdruckstrahler TNN 15/32 von Heraeus (Deutschland) ausgerüstet war. Das Wasser gelangte dann in das Mischbett (Ionenaustauscher) 14, welches einen Inhalt von 1950 ml aufwies (Typ Ultrapure der Firma Sybron Barnstead). Als letztes Gerät der Wasserreinigung war ein Filter 15 vorgesehen. Im vorliegenden Fall handelte es sich um ein Kerzenfilter Typ PFT-08-10-UN-15 der Firma Brunswick mit einem Rückhaltevermögen von 0,8 $\mu$m. Die Anlage wurde derart betrieben, dass keine Wasserrückführung 19 stattfand. 100 % des Wassers, welches mit Luft - und somit auch mit Luftsauerstoff - gesättigt war, wurde über die Speisewasserzufuhr 1 auf die Vorbehandlungseinrichtung 2 aufgegeben. Aus diesem Grund betrug die $O_3$ Konzentration nach der elektrochemischen Zelle (3) lediglich 1,6 mg/l, während die $O_2$-Konzentration sich auf ca. 10 mg/l einstellte. Die $O_3$-Konzentration nach dem Reaktionsgefäss 12 für Ultraviolett-Bestrahlung betrug noch 0,02 mg/l. Versuchsweise wurden dem Speisewasser 2 ppm 2-Propanol beigemischt, um den totalen Abbau von organischem Kohlenstoff zu untersuchen.

Ausführungsbeispiel 2:

Das Verfahren gemäss Variante B wurde in einer grösseren Anlage durchgeführt, welche alle in der Figur bezeichneten Geräte enthielt, inkl. Reaktionsgefäss 13 mit Katalysator zum Abbau von $O_2$ und $O_3$.

Dementsprechend wurde dem Reaktionsgefäss 13 kathodisch in der elektrochemischen Zelle 3 erzeugtes $H_2$ (8) zugeführt.

Die Anlge war für einen Wasserdurchsatz von 10 $m^3/h$, bezogen auf die elektrochemische Zelle 3, dimensioniert. Letztere wies eine Elektrodenfläche von 4 $dm^2$ auf und wurde mit einer Stromstärke von 400 A betrieben, was einer Stromdichte von 1 $A/cm^2$ entsprach. Die Zellenspannung betrug 3,8 V. Der Verweilzeitbehälter 11 hatte einen Inhalt von 150 l, so dass die durchschnittliche Verweilzeit ca. 54 s betrug. Das mit 5 Quecksilberdampf-Niederdruck-Hochstromlampen bestückte Reaktionsgefäss 12 für Ultraviolett-Bestrahlung hatte einen Inhalt von 160 l. Das Reaktionsgefäss 13 mit Edelmetall-Katalysator hatte einen Inhalt von 160 l und bestand aus einem Bett von Kunststoffträgern, die mit Palladium beschichtet waren. Im vorliegenden Fall handelte es sich um ein Produkt mit dem Handelsnamen "Lewatit OC1045" der Firma Bayer, Deutschland. Das Mischbett 14 mit Ionenaustauschern hatte einen Inhalt von 200 l. Nach Durchströmen des Filters 15 wurde das Reinstwasser 16 dem Verbraucher 17, einer Fertigungsanlage für Halbleiterbausteine, zugeführt.

Die Anlage wurde derart betrieben, dass 90 % des durch die elektrochemische Zelle 3 fliessenden Wassers über die Wasserrückführung 19 wieder auf die Vorbehandlungseinrichtung 2 aufgegeben wurden, während 10 % als Rohwasser über die Speisewasserzufuhr 1 in den Kreislauf eingeleitet wurden.

Der Gashaushalt der Anlage stellte sich wie folgt:

| Am Ausgang des Gerätes | Konzentration (mg/l) | | |
|---|---|---|---|
| | $O_3$ | $O_2$ | $H_2$ |
| Zelle (3) | 2,15 | 9,65 | 0 |
| Reakt. UV (12) | 0,01 | 10,5 | 1,31 |
| Reakt. Kat. (13) | 0 | 0,02 | 0 |

Ausführungsbeispiel 3:

Das Verfahren gemäss Variante C wurde in einer kleineren Anlage durchgeführt, in welcher kein Reaktionsgefäss 12 für Ultraviolett-Bestrahlung vorhanden war. Die Behandlung des Wassers wurde im wesentlichen durch Ozon vorgenommen, wobei der Ueberschuss an elementaren Sauerstoffträgern durch Reduktion mit kathodisch erzeugtem $H_2$ abgebaut wurde.

Die Anlage war für einen Wasserdurchsatz von 800 l/h, bezogen auf die elektrochemische Zelle 3, dimensioniert. Letztere hatte eine Elektrodenfläche von 25 $cm^2$ und wurde mit einer Stromstärke von 30 A betrieben. Dies entsprach einer Stromdichte von 1,2 $A/cm^2$. Die Zellenspannung betrug 3,9 V. Der Verweilzeitbehälter 11 hatte einen Inhalt von 11 l, so dass die durchschnittliche Verweilzeit ca. 50 s betrug. Das Reaktionsgefäss 13 mit Edelmetall-Katalysator hatte einen Inhalt von 12 l. Die Aktivmasse war ein Erzeugnis mit dem Handelsnamen Lewatit von Bayer. Das mit Ionenaustauschern bestückte Mischbett 14 hatte einen Inhalt von 16 l.

die Anlage wurde derart betrieben, dass nach einer vorausgegangenen anlaufphase 100 % des durch die elektrochemische Zelle 3 fliessenden Wassers über die Wasserrückführung 19 auf die Vorbehandlungseinrichtung 2 aufgegeben wurden, während der Zufluss von Rohwasser über die Speisewasserzufuhr 1 unterbunden wurde.

Der Gashaushalt der Anlage stellte sich wie folgt:

4

| Am Ausgang des Gerätes | Konzentration (mg/l) | | |
|---|---|---|---|
| | $O_3$ | $O_2$ | $H_2$ |
| Zelle (3) | 2,2 | 9,4 | 0 |
| Verweilzeitbehälter (11) | 1,6 | 9,8 | 1,43 |
| Reakt. Kat. (13) | 0 | 0,02 | 0 |

Die Erfindung ist nicht auf die Ausführungsbeispiele beschränkt.

Die Forderung nach Einhaltung einer bestimmten minimalen Verweilzeit nach der Beladung des Wassers mit Ozon (nach Durchtritt durch die elektrochemische Zelle 3) ist nicht an das Vorhandensein eines eigens dazu bestimmten Verweilzeitbehälters 11 gebunden. Falls nur geringe Wassermengen zirkulieren, andererseits lange Leitungen notwendig sind, kann - insbesondere bei genügend hoher Turbulenz im Kreislauf - der Verweilzeitbehälter 11 vergleichsweise klein ausfallen oder ganz entfallen.

Ausserdem ist es nicht in jedem Fall notwendig, die gesamte, in der Vorbehandlungseinrichtung 2 aufbereitete Wassermenge durch die elektrochemische Zelle 3 zu schicken. Es kann ein sich nach den Erfordernissen richtender Teil nach der Vorbehandlungseinrichtung 2 abgezweigt und direkt dem Verweilzeitbehälter 11 zugeführt werden: Nebenschluss (In der Figur nicht eingezeichnet!). Andererseits kann dem Wasser nach dem Austritt aus der elektrochemischen Zelle 3 ein Teil des gelösten und/oder als Blasen vorhandenen $O_2$ und $O_3$ (allfälliger Ueberschuss) entzogen und über das Ventil 9 einer Einrichtung 10 zur Ueberführung von $O_3$ in $O_2$ zugeleitet werden. Es kann aber auch am Eintritt des Reaktionsgefässes 13 mit Katalysator zum Abbau von $O_2$ und $O_3$ zusätzlich Zufuhr von Fremdwasserstoff 20 (gestrichelt gezeichnet) vorgesehen werden. Die letztgenannten beiden Massnahmen bewirken im Endeffekt das gleiche: Vermeidung von jeglichem Sauerstoffgehalt in elementarer Form in endgültigem Reinstwasser für den Verbraucher 17. Der Verweilzeitbehälter 11 und das Reaktionsgefäss 12 für Ultraviolett-Bestrahlung können in ein und demselben gemeinsamen Gefäss zusammengefasst sein, so dass das In-Kontakt-Bringen des Ozons mit den im Wasser enthaltenen Stoffen und/oder Keimen gleichzeitig und am gleichen Ort wie die Ultraviolett-Bestrahlung erfolgt.

Grundsätzlich kann das Verfahren mit Ultraviolett-Bestrahlung allein oder mit $O_2$- und $O_3$-Abbau mittels $H_2$ allein oder unter gleichzeitiger Anwendung beider Verfahrensschritte durchgeführt werden. Deshalb sind die Reaktionsgefässe 12 und 13 in der Figur zwischen senkrechte gestrichelte Linien gesetzt worden.

**Patentansprüche**

1. Verfahren zum Abbau von organischen Stoffen und/oder von Keimen in vorbehandeltem Speisewasser für Reinstwasserkreisläufe,

    a) wobei mindestens ein Teil des vorbehandelten Speisewassers in einer elektrochemischen Zelle (3) mit einem Feststoffelektrolyten (4), einem Anodenraum (5) und einen Kathodenraum (6) elektrolysiert wird,

    b) wobei sich in den Anodenraum (5) Ozon und

    c) in den Kathodenraum (6) Wasserstoff (8) bildet,

    d) wobei das zu reinigende Wasser während einer vorgebbaren Verweilzeit mit dem gebildeten Ozon in Kontakt bleibt, um in dem zu reinigenden Wasser enthaltene organische Stoffe und/oder Keime abzubauen,

    dadurch gekennzeichnet,

    e) dass das ozonisierte Wasser wenigstens mit einem Teil des bei der Elektrolyse gebildeten Wasserstoffs (8) in Kontakt gebracht wird, um Restsauerstoff und Restozon im Wasser abzubauen.

2. Verfahren nach Anspruch 1, dadurch gekennzeichnet, dass ferner das mit Ozon behandelte Wasser einer Ultraviolett-Bestrahlung ausgesetzt wird, bevor es wenigstens mit einem Teil des bei der Elektrolyse gebildeten Wasserstoffs (8) in Kontakt gebracht wird.

3. Verfahren nach Anspruch 1 oder 2, dadurch gekennzeichnet, dass dem zu reinigenden Wasser zusätzlich zu dem aus der Elektrolyse stammenden Wasserstoff (8) noch fremder Wasserstoff zugeleitet wird.

**4.** Verfahren nach einem der Ansprüche 1 bis 3, dadurch gekennzeichnet, dass das Speisewasser nach der Behandlung mit kathodisch erzeugtem Wasserstoff (8) Ionentauschern eines Mischbetts (14) zugeführt wird, um ihm Reaktionsprodukte zu entziehen.

**5.** Verfahren nach einem der Ansprüche 2 bis 4, dadurch gekennzeichnet, dass die Ultraviolett-Bestrahlung und die Ozonisierung des zu reinigenden Wassers gleichzeitig erfolgen.

**6.** Verfahren nach Anspruch 5, dadurch gekennzeichnet, dass die Ultraviolett-Bestrahlung und die Ozonisierung des zu reinigenden Wassers am selben Ort in einem einzigen Behälter durchgeführt werden.

## Claims

**1.** Process for breaking down organic substances and/or microbes in pretreated feed water for high-purity water recirculation systems,

a) in which at least a part of the pretreated feed water is electrolysed in an electrochemical cell (3) containing a solid electrolyte (4), an anode space (5) and a cathode space (6),

b) in which ozone is formed in the anode space (5) and

c) hydrogen (8) is formed in the cathode space (6),

d) and in which the water to be purified remains in contact with the ozone formed for a specifiable residence time in order to break down organic substances and/or microbes contained in the water to be purified,

characterised in that

e) the ozonised water is brought into contact at least with a part of the hydrogen (8) formed in the electrolysis, in order to break down the residual oxygen and the residual ozone.

**2.** Process according to Claim 1, characterised in that, furthermore, the water treated with ozone is exposed to an ultraviolet irradiation before it is brought into contact at least with a part of the hydrogen (8) formed in the electrolysis.

**3.** Process according to Claim 1 or 2, characterised in that extraneous hydrogen is supplied to the water to be purified in addition to the hydrogen (8) originating from the electrolysis.

**4.** Process according to any of Claims 1 to 3, characterised in that the feed water is supplied to ion exchangers of a mixed bed (14) after the treatment with cathodically produced hydrogen (8), in order to remove reaction products from it.

**5.** Process according to any of Claims 2 to 4, characterised in that the ultraviolet irradiation and the ozonisation of the water to be purified are carried out simultaneously.

**6.** Process according to Claim 5, characterised in that the ultraviolet irradiation and the ozonisation of the water to be purified are carried out at the same point in a single container.

## Revendications

**1.** Procédé pour la dégradation de substances organiques et/ou de germes dans une eau d'alimentation préalablement traitée pour des circuits d'eau extra-pure

a) dans lequel au moins une partie de l'eau d'alimentation préalablement traitée est électrolysée dans une cellule électrochimique (3) avec un électrolyte solide (4), un espace anodique (5) et un espace cathodique (6),

b) dans lequel de l'ozone se forme dans l'espace anodique (5) et

c) de l'hydrogène (8) dans l'espace cathodique (6),

d) dans lequel l'eau à purifier reste pendant un temps de séjour prédéterminable en contact avec l'ozone formée, afin de dégrader les substances organiques et/ou germes contenus dans l'eau à purifier,

caractérisé en ce que

e) l'eau ozonisée est mise en contact au moins avec une partie de l'hydrogène (8) formée lors de l'électrolyse, afin de dégrader l'oxygène et l'ozone résiduaires de l'eau.

2. Procédé selon la revendication 1, caractérisé en ce que, par la suite, l'eau traitée par l'ozone est exposée à une irradiation aux ultraviolets, avant d'être mise en contact au moins avec une partie de l'hydrogène (8) formée lors de l'électrolyse.

3. Procédé selon la revendication 1 ou 2, caractérisé en ce qu'on apporte à l'eau à purifier, en plus de l'hydrogène (8) produit par l'électrolyse, aussi de l'hydrogène étranger.

4. Procédé selon l'une des revendications 1 à 3, caractérisé en ce que l'eau d'alimentation est, après traitement par l'hydrogène (8) produit cathodiquement, amenée à des échangeurs d'ions d'un lit de mélange (14), afin d'en extraire ses produits de réaction.

5. Procédé selon l'une des revendications 2 à 4, caractérisé en ce que l'irradiation aux ultraviolets et l'ozonisation de l'eau à purifier interviennent en même temps.

6. Procédé selon la revendication 5, caractérisé en ce que l'irradiation aux ultraviolets et l'ozonisation de l'eau à purifier sont réalisées dans un même lieu et dans un seul récipient.